# EUROPEAN PATENT APPLICATION

(11) **EP 3 483 401 A1**
(43) Date of publication of application: **15.05.2019**
(21) Application number: 17824553.6
(22) Date of filing: 06.07.2017
(51) Int. Cl.: F01K 25/10, H01M 8/04, H01M 8/0606, F01K 23/06

(54) **SYSTEM USING COLD ENERGY**

(30) Priority: 06.07.2016 KR 20160085274
(71) Applicant: Cytroniq Co., Ltd., Cheonan-si, Chungcheongnam-do 31075 (KR)
(72) Inventor: LEE, Michael Myung Sub, Cheonan-si Chungcheongnam-do 31066 (KR)
(74) Representative: Zardi, Marco
(86) International application number: PCT/KR2017/007226
(87) International publication number: WO 2018/008997

(57) **Abstract**

According to an embodiment of the present invention, a cold energy utilization system is provided. The system includes a fuel storage tank for storing liquefied fuel, a reformer for extracting reformed gas from a boiled off gas (BOG) naturally generated from the liquefied fuel stored in the fuel storage tank, a hydrogen liquefier for generating liquefied hydrogen by liquefying hydrogen gas transferred from the reformer, a heat exchanger for transferring cold energy of the liquefied fuel transferred from the fuel storage tank and cold energy of the liquefied hydrogen transferred from the hydrogen liquefier to a refrigerant, one or more super conducting devices, and a refrigerant line for supplying the refrigerant to the hydrogen liquefier or to the one or more super conducting devices. The hydrogen liquefier or the one or more superconducting devices maintains a superconducting state using the cold energy of the refrigerant and operates in the superconducting state.

## Description

### Technical Field

Embodiments based on the concept of the present invention relate to a cold energy utilization system and, more particularly, to a cold energy utilization system that efficiently utilizes cold energy of cryogenic liquefied fuel.

### Background Art

Superconductivity is a phenomenon in which a material has zero electrical resistance and pushes out an internal magnetic field. Superconductors are materials in which superconducting phenomena appear.

Generally, in a superconducting system using a superconducting device including a superconductor, separate cooling facilities for cooling a superconductor to a temperature below the critical temperature are required. These cooling facilities have problems of taking up a large space and of being difficult to operate, maintain, and manage.

There is a technique of supplying liquefied natural gas (LNG) stored in an LNG storage tank as a coolant (refrigerant) so as to circulate through a superconducting device to replace a cooling facility. However, since the technique uses the LNG only as a coolant (refrigerant), its utilization advantage and energy efficiency are low when the technique is used for a system in which various energy sources are utilized.

### Disclosure

### Technical Problem

The present invention has been made in view of the problems occurring in the related art and an objective of the present invention is to provide a cold energy utilization system that efficiently utilizes cold energy of liquefied fuel.

### Technical Solution

According to an embodiment of the present invention, there is provided a cold energy utilization system including: a fuel storage tank for storing liquefied fuel; a reformer for extracting reformed gas from boiled off gas (BOG) generated from the liquefied fuel stored in the fuel storage tank; a reformed gas liquefier for producing liquefied reformed gas by liquefying the reformed gas transferred from the reformer; a heat exchanger for transferring cold energy of the liquefied fuel transferred from the fuel storage tank and cold energy of the liquefied reformed gas transferred from the reformed gas liquefier to a refrigerant; one or more superconducting devices; and a refrigerant line for supplying the refrigerant from the heat exchanger to the reformed gas liquefier or the one or more superconducting devices, in which the reformed gas liquefier or the one or more superconducting devices operate in a superconducting state by using the refrigerant transferred from the heat exchanger.

According to another embodiment of the present invention, there is provided a cold energy utilization system including: a fuel storage tank for storing liquefied fuel; a reformer for extracting reformed gas from boiled off gas (BOG) generated from the liquefied fuel stored in the fuel storage tank; a reformed gas liquefier for producing liquefied reformed gas by liquefying the reformed gas transferred from the reformer; a heat exchanger for transferring cold energy of the liquefied fuel transferred from the fuel storage tank and cold energy of the liquefied reformed gas transferred from the reformed gas liquefier to a refrigerant; an engine for generating mechanical energy by using gaseous fuel transferred from the heat exchanger; a superconducting that maintains a superconducting state by using cold energy contained in the refrigerant and converts the mechanical energy transferred from the engine to electrical energy; and a superconducting power device that maintains a superconducting state by using the cold energy contained in the refrigerant and consumes the electrical energy, in which the reformed gas liquefier maintains a superconducting state by using the cold energy contained in the refrigerant and operates in the superconducting state.

According to a further embodiment of the present invention, there is provided a cold energy utilization system including: a fuel storage tank for storing liquefied fuel; a BOG storage tank for storing BOG generated from the liquefied fuel stored in the fuel storage tank; a fuel liquefier for liquefying the BOG transferred from the BOG storage tank and for transferring the resulting liquefied BOG to the fuel storage tank; a reformer for extracting reformed gas from the BOG transferred from the BOG storage tank; a reformed gas liquefier for producing liquefied reformed gas by liquefying the reformed gas transferred from the reformer; a heat exchanger for transferring cold energy of the liquefied fuel transferred from the fuel storage tank and cold energy of the liquefied reformed gas transferred from the reformed gas liquefier to a refrigerant; one or more superconducting devices; and a refrigerant line for supplying the refrigerant from the heat exchanger to the fuel liquefier, the reformed gas liquefier, or the one or more super conducting devices, in which the fuel liquefier, the reformed gas liquefier, or the one or more superconducting devices maintain a superconducting state by using cold energy of the refrigerant and operate in the superconducting state.

### Advantageous Effects

The cold energy utilization systems according to the embodiments of the present invention can diversely utilize the cold energy of liquefied fuel.

The cold energy utilization systems according to the embodiments of the present invention can use cold energy of liquefied fuel or cold energy of liquefied reformed gas to create a cryogenic environment in which cryogenic devices such as a liquefying device and a superconducting device operate. Therefore, according to the present invention, the cold energy of liquefied fuel can be effectively used.

The cold energy utilization systems according to the embodiments of the present invention can maintain a superconducting state for a superconducting generator by using the cold energy of liquefied fuel and can convert mechanical energy generated by an engine that operates by using the liquefied fuel into electrical energy. Therefore, energy efficiency can be improved.

### Description of Drawings

FIG. 1 is a block diagram conceptually illustrating an energy conversion system according to an embodiment of the present invention;
FIG. 2 is a view illustrating an example in which a portion of a fuel delivery line is wound around an energy conversion device in the form of a coil, according to an embodiment of the present invention;
FIG. 3 is a block diagram conceptually illustrating an energy conversion system according to another embodiment of the present invention;
FIG. 4 is a flowchart illustrating a numerical analysis method for diagnosis/control of the energy conversion system according to any one of the embodiments of the present invention, and a monitoring and measuring method using the result of the numerical analysis;
FIG. 5 is a flowchart illustrating a method of synchronizing delivery times of measurement-related signals of the energy conversion system according to any one of the embodiments of the present invention;
FIG. 6 is a block diagram conceptually illustrating a hybrid system that includes the energy conversion system according to any one of the embodiments of the present invention and utilizes cold energy of liquefied fuel; and
FIG. 7 is a block diagram conceptually illustrating a cold energy utilization system according to an embodiment of the present invention.

### Best Mode

Herein below, preferred embodiments of the present invention will be described in detail with reference to the accompanying drawings.

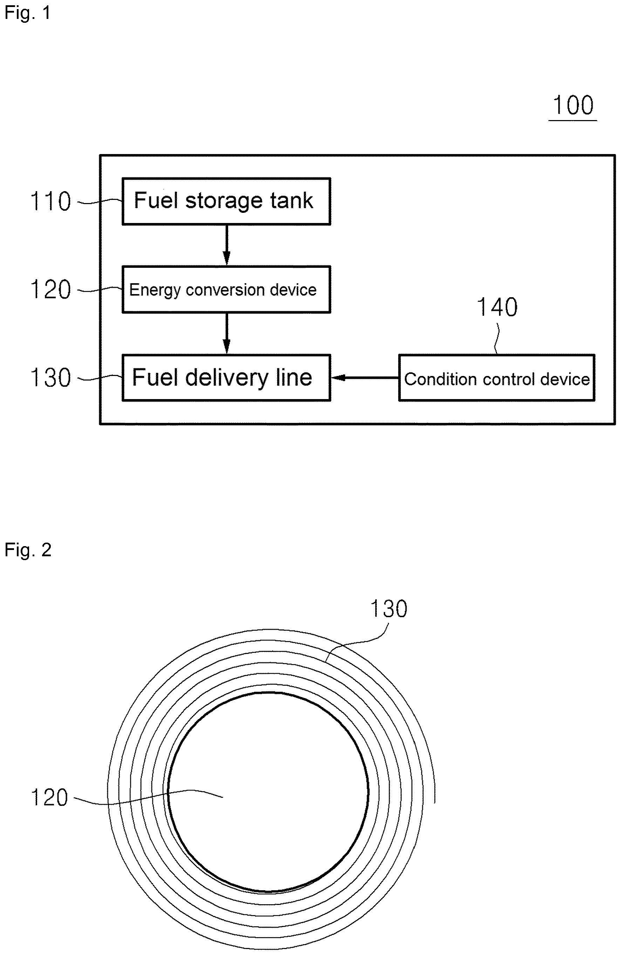

FIG. 1 is a block diagram conceptually illustrating an energy conversion system according to one embodiment of the present invention. Referring to FIG. 1, an energy conversion system 100 according to one embodiment of the present invention includes a fuel storage tank (or fuel storage device) 110, an energy conversion device 120, a fuel delivery line 130, and a condition control device 140.

The fuel storage tank 110 stores liquefied fuel. The liquefied fuel stored in the fuel storage tank 110 is supplied to a drive device or a fuel cell. The drive device is an engine or an internal combustion engine, but is not limited thereto. Although one fuel storage tank 110 is shown in FIG. 1, the energy conversion system may include one or more fuel storage tanks 110.

The liquefied fuel stored in the fuel storage tank 110 is in a low temperature (e.g., below zero) state or a high pressure state. Examples of the liquefied fuel include liquefied petroleum gas (LPG), liquefied natural gas (LNG), liquefied hydrogen, and the like. The LPG, the LNG, and the liquefied hydrogen are in gas phase at 25°C and 1 atm (i.e., in a standard state). To maintain a state in which the LPG, the LNG, or the liquefied hydrogen is in liquid phase, the inside of the fuel storage tank 110 is maintained at a low temperature state or a high pressure state.

The liquefied fuel stored in the fuel storage tank 110 is converted into electrical energy (electric power) or mechanical energy (mechanical power) before being transferred from the fuel storage tank 110 to the energy conversion device 120. In this case, the fuel storage tank 110 transfers the converted electrical energy or mechanical energy to the energy conversion device 120.

The energy conversion device 120 converts the electrical energy transferred from the fuel storage tank 110 into mechanical energy by using, for example, a motor or converts the transferred mechanical energy into electrical energy by using, for example, a generator.

The energy conversion device 120 exhibits optimal conversion efficiency at temperatures within a specific low-temperature range. According to the embodiment, the energy conversion device 120 exhibits optimal energy conversion efficiency at temperatures within a cryogenic temperature range. For example, the energy conversion device 120 is a superconducting motor or a superconducting generator exhibiting an optimum conversion efficiency at temperatures within a specific cryogenic temperature range.

In this description, the term "cryogenic temperatures" refer to temperatures at which superconductivity can be exhibited or observed. For example, the cryogenic temperature means a temperature that is 40 K or below, but is not limited thereto.

The fuel delivery line 130 is a channel or a device for transferring the liquefied fuel stored in the fuel storage tank 110 to the drive device or fuel cell.

According to the embodiment, the fuel delivery line 130 uses the heat generated in the energy conversion device 120 to gasify the liquefied fuel transferred from the fuel storage tank 110, and to supply the resulting gaseous fuel to the drive device or fuel cell.

According to the embodiment, a portion of the fuel delivery line 130 is wound around the energy conversion device 120. For example, as shown in FIG. 2, a portion of the fuel delivery line 130 has a pipe structure that is wound around the energy conversion device 120 in the form of a coil. The fuel delivery line 130 is also wound around a power line. In this case, since the fuel delivery line 130 is used as a heat exchanger, power loss can be minimized.

According to the embodiment, at least a portion of the fuel delivery line 130 is wound around the entire body of the energy conversion device 120.

Since the energy conversion device 120 and the fuel delivery line 130 perform heat exchange with each other, when the temperature of the energy conversion device 120 is lowered, the condition control device 140 controls the fuel delivery line 130 such that the temperature of the energy conversion device 120 is increased to a predetermined reference temperature range.

According to the embodiment, the condition control device 140 includes a temperature sensor capable of measuring the temperature of the energy conversion device 120. The condition control device 140 monitors the temperature of the energy conversion device 120 using the temperature sensor and determines whether the temperature of the energy conversion device 120 is out of the reference temperature range on the basis of the result of the monitoring.

The energy conversion system 100 shown in FIG. 1 may be mounted in a vessel, a vehicle, a rocket, a generator, or the like, but its application is not limited thereto.

The energy conversion system 100 is configured to prevent accidents related to the liquefied fuel stored in the fuel storage tank 110.

The energy conversion system 100 provides cold energy (or cold energy) of the liquefied fuel stored in the fuel storage tank 110 to a device that uses a refrigerant, such as a superconducting motor, a generator, a power cable, a secondary battery, or a fuel cell. For example, the refrigerant may be an inert gas. In that case, the superconducting motor, the generator, the power cable, the secondary battery, or the fuel cell can operate under optimal conditions (for example, conditions in which a superconducting state is maintained, thereby exhibiting optimal performance and operation efficiency.

The energy conversion system 100 may further include a gas analyzer capable of monitoring an inert gas or air. According to the embodiment of the present invention, the gas analyzer is installed between a feeding stage (the fuel storage tank 110) of the inert gas or air and the energy conversion device 120, between an output stage (the fuel delivery line 130) and the drive device, or between the fuel delivery line 130 and the fuel cell.

For example, the gas analyzer is an analyzer using absorption spectrometry, combustion analysis, chemistry analysis, and/or instrumental analysis. For example, the gas analyzer is a spectrometer or a gas absorption based analyzer.

Thus, the energy conversion system 100 can monitor the inert gas or air and prevent a possible explosion by using the monitoring results.

The energy conversion system 100 measures various parameters in the energy conversion system 100 or in the structure including the energy conversion system 100 by using an electrical or optical measuring technology. For example, since the energy conversion system 100 will be mounted in a vessel, a vehicle, a rocket, or a generator (e.g., a wind power generator, a tidal generator, a hydro generator, or an ocean current generator) that generates electric power using an external force, the structure including the energy conversion system 100 may be a ship, a vehicle, a rocket, or a generator.

According to the embodiment, the energy conversion system 100 can measure the external force acting on the structure or measure the magnitude of the response of the structure with respect to the external force by using electrical or optical measuring technology. For example, the external force may be a wind load, a wave load, or a current load, and the response of the structure to the external force may be displacement, deformation, motion, or vortex.

According to the embodiment, the energy conversion system 100 can measure the internal force acting on the structure or the response of the structure to the internal force by using electrical or optical measuring technology. For example, the internal force acting on the components (e.g., the fuel storage tank 110 or 320, the energy conversion device 120 or 330, the fuel delivery line 130 or 140, the a condition control device 140) of the energy conversion system 100 may be a sloshing load, a flow load, a pressure load, or a thermal load. The response of the structure to the internal force may be displacement, deformation, motion, walking, buckling, or vortex.

For example, the energy conversion system 100 can perform measurements by using a Lidar, a particle tracking velocimetry, a particle image velocimetry, a strain sensor, an accelerometer, an ammeter, an acoustic emission tester, a seismometer, a current meter, a thermal sensor, an optical time domain reflectometer (OTDR), a distributed temperature sensor (DTS), a Brillouin optical time domain reflectometry (BOTDR), a distributed acoustic sensor (DAS), or a distributed vibration sensor (DVS).

The energy conversion system 100 performs a diagnostic function or a prognostic function by using the measurement results and the condition based maintenance technique.

According to the embodiment, the energy conversion system 100 has a control function including self control and predictive control (measuring, diagnosing, and controlling temperature, pressure, and fluid dynamics of gas or fluid), and a safety-related function including emergency control (EC) or emergency shutdown (ESD).

According to the embodiment, the energy conversion system 100 monitors the condition or location of an operator on an offshore structure by using a heart beat or behavior sensor or a position sensor, and generates an alarm or a warning signal when the operator is in a dangerous condition.

According to the embodiment, the energy conversion system 100 provides a maintenance function based on the condition based maintenance.

The energy conversion system 100 can minimize an error in measurement results or empirical data by using optical measurement technology (for example, wired optical measurement or wireless optical measurement) when the structure (a measurement target object) to be measured is a conductor or when the energy conversion system 100 performs measurements within an electromagnetic field. According to the embodiment, the energy conversion system 100 processes the measurement results or the empirical data using a context awareness technique to minimize the error range of the measurement results or the empirical data.

Therefore, the energy conversion system 100 can eliminate the uncertainty of the measurement and can improve the accuracy or reproducibility of the measurement.

According to the embodiment, an error range of the measurement result or the empirical data can be minimized by using artificial intelligence technology machine learning technology. Thus, the energy conversion system 100 can operate semi-automatically or fully automatically.

According to the embodiment, the energy conversion system 100 performs wired optical measurement by using an optical fiber sensor. According to the embodiment, the optical fiber sensor can measure the temperature or tension of the structure to be measured.

For example, the optical fiber sensor may be an optical signal transmission fiber. The optical fiber sensor may be an optical signal transmission fiber made of silica, quartz or polymer. The optical signal transmission fiber may be coated or packaged with a multifunctional composite having a thermal insulation function or a tension reinforcing function.

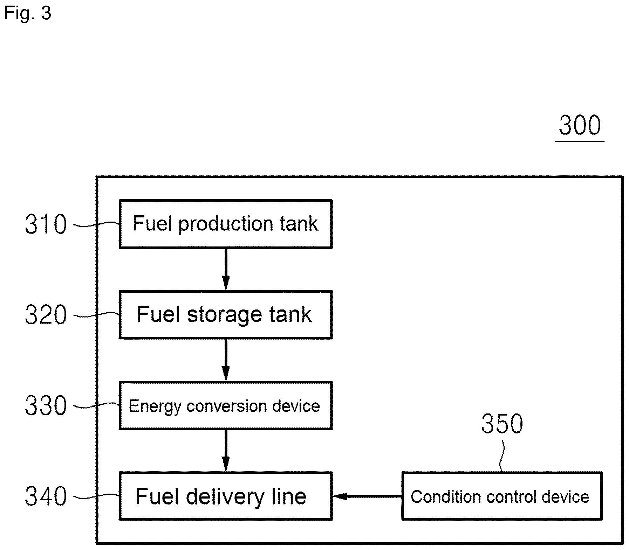

FIG. 3 is a block diagram conceptually illustrating an energy conversion system according to another embodiment of the present invention. Referring to FIG. 3, an energy conversion system 300 according to another embodiment of the present invention includes a fuel production device 310, a fuel storage tank (or fuel storage device) 320, an energy conversion device 330, a fuel delivery line 340, and a condition control device 350. According to this embodiment, the energy conversion system 300 of FIG. 3 will be provided in a generator that uses water. For example, the energy conversion system 300 will be provided in a marine wind power generator, a tidal generator, an ocean current generator, or a hydropower generator.

The energy conversion system 300 illustrated in FIG. 3 differs from the energy conversion system 100 illustrated in FIG. 1 in that it further includes the fuel production device 310 that produces hydrogen fuel and it uses hydrogen fuel among the liquefied fuels. The energy conversion device 330, the fuel delivery line 340, and the condition control device 350 of FIG. 3 have functions associated with hydrogen fuel among the functions of the energy conversion device 120, the fuel delivery line 130, and the condition control device 140 of FIG. 1, respectively. Thus, a detailed description of these devices 320, 330, 340, and 350 is omitted.

The fuel production device 310 produces hydrogen fuel by using water available to the energy conversion system 300 (for example, water that is present at a position adjacent to the energy conversion system 300), and supplies the produced hydrogen fuel to the fuel storage tank 320. The fuel storage tank 320 stores the hydrogen fuel transferred from the fuel production device 310.

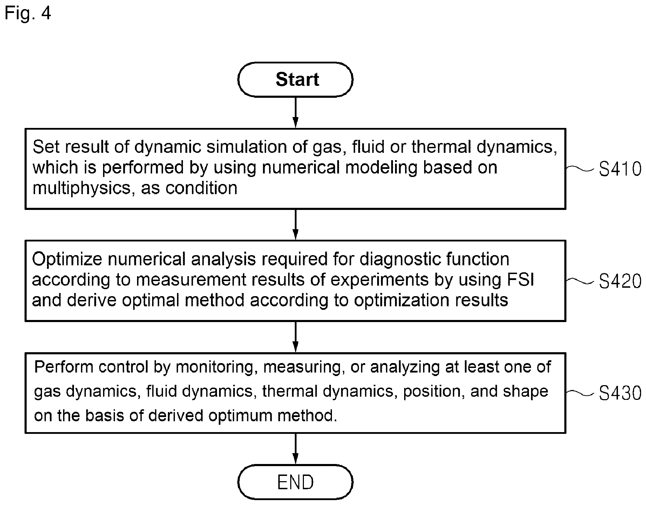

FIG. 4 is a flowchart illustrating a numerical analysis method for a diagnostic function or a control function of the energy conversion system according to the embodiment of the present invention, and a monitoring/measuring method based on the numerical analysis.

Referring to FIGS. 1 to 4, the energy conversion system 100 or 300 (herein below, denoted representatively only by 100) sets the results of dynamic simulation of gas, fluid, or thermal dynamics, which is performed by using numerical analysis (or numerical modeling) based on multiphysics or similar techniques, as a boundary condition (Step S410). For example, the condition is a condition associated with an external force or an internal force.

The energy conversion system 100 optimizes or validates the numerical analysis (or numerical analysis modeling) for a diagnostic function (or a control function) according to the measurement (or observation) results or empirical data by using a fluid structure interaction (FSI) technique or a similar technique, and finds the optimal (or simple) method (or expression) according to the result of the optimization. For example, the energy conversion system 100 optimizes the numerical analysis method for the diagnostic function (or the control function) to a suitable method according to the measurement results.

The energy conversion system 100 monitors, measures, or analyzes at least one of gas, fluid or thermal dynamics, position, or shape by using the optimal method found at Step S420 to perform control (feed forward control or predictive control) (Step S430) .

Thus, the energy conversion system 100 can reduce the fuel consumption of the energy conversion system 100 (or the structure including the energy conversion system 100), perform a safe operation, or extend a safe operation time.

According to the embodiments, the energy conversion system 100 performs Steps S410 through S430 of FIG. 4 using artificial intelligence technology or machine learning technology. Thus, the energy conversion system 100 automatically or semi-automatically operates.

The energy conversion system 100 performs the measurement on the structure, scans the contour of the structure using a pulsed laser (i.e., laser scanning) according to the measurement results, processes the scanning results into a three-dimensional image, and displays the three-dimensional image.

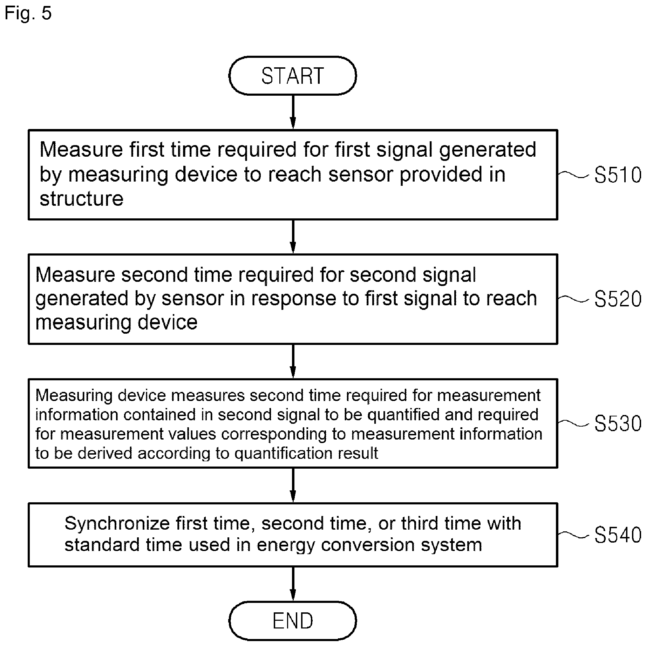

FIG. 5 is a flowchart illustrating a method of synchronizing delivery times of measurement-related signals of the energy conversion system according to any one of the embodiments of the present invention; Referring to FIGS. 1 to 5, the energy conversion system 100 measures a first time required for a first signal generated by a measuring device to reach a sensor mounted on the structure (Step S510). For example, the first signal is a signal to enable or disable the sensor. For example, the first signal is a turn-on signal or an operating voltage. The energy conversion system 100 measures a second time required for a second signal generated by the sensor in response to the first signal to reach the measuring device meter (Step S520). For example, the second signal is a detection signal generated by the sensor. For example, the second signal includes measurement information.

The energy conversion system 100 measures a third time taken for the measurement information contained in the second signal to be quantified and for measurement values corresponding to the measurement information to be derived through the quantification (Step S530).

The energy conversion system 100 synchronizes the measured first time, the measured second time, or the measured third time with a standard time used in the energy conversion system 100 (Step S540) .

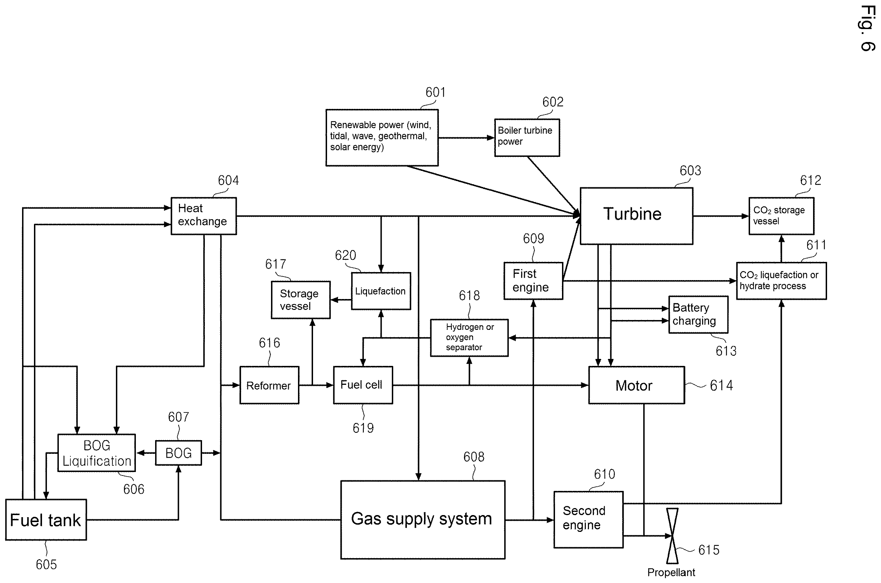

FIG. 6 is a block diagram conceptually illustrating a hybrid system that includes the energy conversion system according to any one of the embodiments of the present invention and which utilizes cold energy of liquefied fuel.

Referring to FIG. 6, renewable power 601 such as wind, tidal, wave, geothermal, or solar energy and mechanical power 602 generated by a boiler turbine are transmitted to a turbine (or a steam turbine) 603. The turbine 603 may be a generator capable of generating electrical energy. According to the embodiments, the turbine 603 utilizes the transmitted power 601 and 602 to produce electrical energy.

The turbine 603 receives cold energy of liquefied fuel through a heat exchange 604 to produce electrical energy (or electricity). The produced electrical energy is stored through battery charging 613. According to the embodiments, the heat exchanger 604 of FIG. 6 corresponds to the energy conversion device 120 of FIG. 1.

According to the embodiments, the turbine 603 will be provided in a hybrid vehicle, a vessel, a rocket, or the like.

Herein below, an automotive generator provided in a hybrid vehicle will be exemplarily described. The automotive generator is connected to the engine of a vehicle via a belt. In this case, the belt is connected to a rotating body (for example, a rotor) of the automotive generator. When the engine is driven to operate, the rotating body of the automotive generator is rotated and, as a result, the automotive generator produces electrical energy. That is, the automotive generator converts the mechanical energy generated by the engine into electrical energy.

The automotive generator includes a generator for inducing a predetermined AC voltage according to the rotation of the rotating body and for rectifying the AC voltage to generate a DC voltage, a battery connected between an output terminal of the generator and the ground to accumulate the electrical energy supplied from the generator, a warning lamp connected to the output terminal of the generator at a first end thereof, a warning lamp driving transistor connected between a second end of the warning lamp and the ground, and a detecting device having terminals receiving the output of the generator as an input and turning on the warning lamp driving transistor so that the warning lamp can be turned on when the terminals are short-circuited. A protection diode is connected between the terminals, and a load is connected to the output terminal of the generator.

When one of the terminals is short-circuited, the warning lamp of the automotive generator is turned on, but electrical energy can be consciously generated and transmitted to the battery or the load through the other terminals.

The heat exchanger 604 performs heat exchange with boiled off gas (BOG) 607 that is produced through BOG liquefaction 606 of the liquefied fuel stored in a fuel storage vessel 605, thereby generating cold energy. According to the embodiments, the fuel storage vessel 605 is a fuel storage tank 110 of FIG. 1.

The cold energy is transferred to a gas supply system 608. According to the embodiments, the gas supply system 608 is a fueled gas supply system.

The gas supply system 608 corresponds to the condition control device 104 of FIG. 1.

According to the embodiments, the gas supply system 608 includes at least one of a motor for driving a compressor, a pump, and a valve.

The gas supply system 608 transfers the received cold energy to a first engine 609 and a second engine 610.

The first engine 609 is driven by the cold energy, thereby driving the turbine 603 to generate electricity. In addition, the first engine 609 can store CO₂ liquefied gas in a CO₂ storage vessel 612 through CO₂ liquefaction or hydrate processing 611. For example, the first engine 609 is a low pressure engine.

The second engine 610 operates according to the received cold energy and drives a propellant 615 in conjunction with the motor 614 driven by the electrical energy supplied from the turbine 603. The propellant 615 may be, but is not limited to, a propellant or a wheel.

For example, the second engine 610 may be a high pressure engine and may operate in an RPM range of 2 to 3000.

The BOG 607 is transferred to a reformer 616. The reformer 616 extracts hydrogen from the BOG 607 and stores the extracted hydrogen in a hydrogen storage vessel 617. According to the embodiments, the hydrogen storage vessel 617 stores liquefied hydrogen fuel produced through the liquefaction process 620. For example, the liquefaction process 620 uses the cold energy generated by the heat exchanger 604.

The liquefied hydrogen fuel is supplied to the fuel cell 619.

A hydrogen or oxygen reformer 618 extracts oxygen or hydrogen using the energy (e.g., electrical energy) transferred to the motor 614 and transfers the extracted oxygen or hydrogen to the fuel cell 619.

The hydrogen or oxygen reformer 618 processes the extracted hydrogen through the liquefaction process 620 and stores the resulting liquefied hydrogen in the hydrogen storage vessel 617.

The hydrogen or oxygen reformer 618 processes the extracted oxygen through liquefaction process 620 and stores the resulting liquefied oxygen in an oxygen storage vessel.

Although a hybrid system of FIG. 6 is illustrated to include only the hydrogen storage vessel 617, the hybrid system may include a separate oxygen storage vessel in addition to the hydrogen storage vessel 617 in the embodiments.

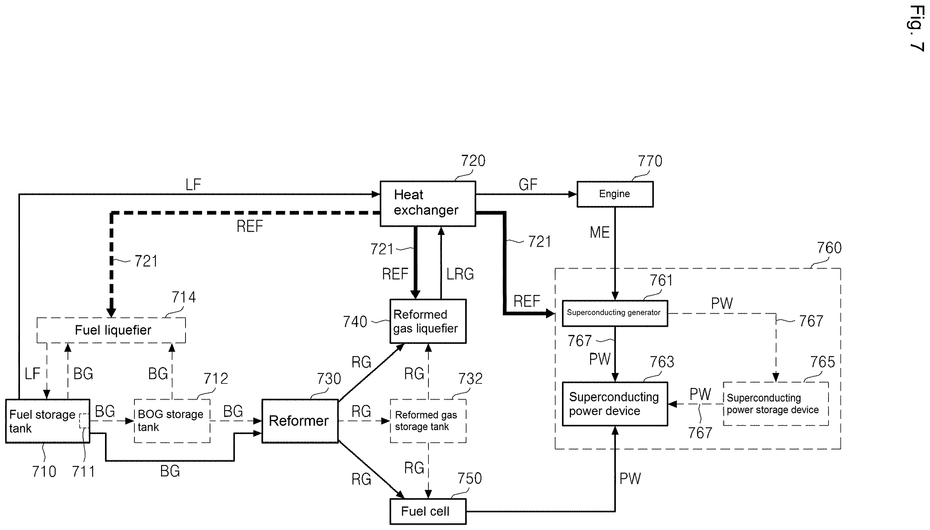

FIG. 7 is a block diagram conceptually illustrating a cold energy utilization system according to an embodiment of the present invention. Referring to FIG. 7, the cold energy utilization system 700 includes a fuel storage tank 710, a heat exchanger 720, a reformer 730, a reformed gas liquefier 740, a fuel cell 750, and a superconducting device 760. According to the embodiments, the cold energy utilization system 700 further includes a boil off gas (BOG) storage tank 712, a fuel liquefier 714, and/or a reformed gas storage tank 732.

The cold energy utilization system 700 of FIG. 7 corresponds to the hybrid system shown in FIG. 6.

The fuel storage tank 710 corresponds to the fuel storage vessel 605 of FIG. 6, the heat exchanger 720 corresponds to the heat exchanger 604 of FIG. 6, the reformer 730 corresponds to the reformer 616 of FIG. 6, the reformed gas liquefier 740 corresponds to the liquefaction process 620 of FIG. 6, the fuel cell 750 corresponds to the fuel cell 619 of FIG. 6, and the superconducting device 760 corresponds to the turbine 603, the first engine 609, the second engine 610, or the motor 614 of FIG. 6. However, the present invention is not limited to such a correspondence relationship.

The fuel storage tank 710 stores liquefied fuel LF. Since the liquefied fuel LF is in a very low temperature state, it has cold energy. The term "cold energy" refers to cryogenic-temperature energy contained in a low temperature object.

According to the embodiments, the liquefied fuel LF is any one of LPG, LNG, and liquefied hydrogen, but is not limited thereto. The liquefied fuel LF means any material that contains hydrogen and which can retain cold energy. For example, liquefied fuel LF may be a natural chemical or a synthetic chemical containing at least one of hydrogen, carbon, and oxygen.

In this description, the term "cryogenic temperatures" refer to temperatures at which superconductivity can be exhibited or observed. For example, the cryogenic temperature means a temperature that is 40 K or below, but is not limited thereto.

The fuel storage tank 710 further includes a control device for maintaining the interior of the fuel storage tank 710 at a low temperature or a high pressure state. The fuel storage tank 710 further includes a temperature sensor or a pressure sensor.

The fuel storage tank 710 transfers the liquefied fuel LF to the heat exchanger 720. The liquefied fuel LF is transferred through a fuel line connected between the fuel storage tank 710 and the heat exchanger 720.

The BOG BG generated from the fuel storage tank 710 is transferred to the reformer 730. The BOG BG means a gas resulting from natural vaporization that occurs in the fuel storage tank 710 in which the liquefied fuel LF is stored. According to the embodiments, the BOG BG is a gas converted from the liquefied fuel LF at a standard state (e.g., 25°C and 1 atm).

According to the embodiments, the fuel storage tank 710 includes a relief valve 711. The relief valve 711 automatically opens when the pressure of the fuel storage tank 710 exceeds a reference pressure as the BOG BG is generated in the fuel storage tank 710. At this time, the generated BOG BG is transferred to the BOG storage tank 712.

The BOG storage device 712 stores the BOG BG transferred from the fuel storage tank 710. The BOG storage device 712 transfers the BOG BG to the fuel liquefier 714 and/or the reformer 730.

The fuel liquefier 714 liquefies the transferred BOG BG and transfers the liquefied BOG to the fuel storage tank 710. The liquefied BOG is the same material as the liquefied fuel LF.

According to the embodiments, the fuel liquefier 714 liquefies the BOG BG using cold energy contained in a cryogenic refrigerant REF transferred from the heat exchanger 720 and supplies the liquefied BOG to the fuel storage tank 710.

The BOG BG generated in the fuel storage tank 710 is stored in the BOG storage device 712.

The heat exchanger 720 transfers the liquefied fuel LF transferred from the fuel storage tank 710 and the cold energy contained in the liquefied reformed gas LRG transferred from the reformed gas liquefier 740 to the refrigerant REF.

The refrigerant REF is a substance capable of transferring heat energy (for example, cold energy). According to the embodiments, the refrigerant REF is a liquefied fuel LF, an inert gas, ammonia, nitrogen, or an antifreeze, but is not limited thereto. The refrigerant REF means any substance that can be maintained in liquid phase at cryogenic temperatures or high temperatures.

According to the embodiments, the heat exchanger 720 is configured such that the liquefied fuel line (or the liquefied hydrogen line through which the liquefied reformed gas LRG is transferred) passes through the refrigerant REF so that cold energy contained in the liquefied fuel LF (or the liquefied reformed gas LRG) can be transferred to the refrigerant REF.

The heat exchanger 720 gasifies the liquefied fuel LF to generate gaseous fuel GF and transfers the cold energy of the liquefied fuel LF to the refrigerant REF using the heat generated through the gasification.

The heat exchanger 720 transfers the refrigerant REF to the devices included in the cold energy utilization system 700. According to the embodiments, the heat exchanger 720 transfers the refrigerant REF to the fuel liquefier 714, the reformed gas liquefier 740, or the superconducting device 760.

According to the embodiments, the cold energy utilization system 700 further includes a refrigerant line 722 that transfers the refrigerant REF to each of the devices.

The heat exchanger 720 transfers the gaseous fuel GF to the engine 770. According to the embodiments, the heat exchanger 720 includes a gasifier for heating the liquefied fuel to produce the gaseous fuel, a compressor for compressing the gaseous fuel transferred from the gasifier to a high pressure, or an injector for transferring the compressed gaseous fuel to the engine.

The reformer 730 reforms the BOG BG transferred from the fuel storage tank 710 (or the BOG storage tank 712) and extracts reformed gas RG from the BOG BG. According to the embodiments, the reformer 730 extracts hydrogen, oxygen, or carbon from the BOG BG.

According to the embodiments, the reformed gas RG may comprise hydrogen, oxygen, carbon, or combinations thereof. For example, the reformed gas RG may be, but is not limited to, hydrogen gas, oxygen gas, carbon gas, hydrocarbon, or oxides of carbon.

The extracted reformed gas RG is stored in the reformed gas storage tank 732. Although the cool heat utilization system 700 is illustrated to include one reformed gas storage tank 732 in FIG. 7, the cool heat utilization system 700 includes a plurality of reformed gas storage tanks according to the embodiments, and a plurality of reformed gases RG are stored separately in the respective reformed gas storage tanks according to the properties thereof.

According to the embodiments, the reformer 730 extracts the reformed gas RG from the BOG BG using the heat energy generated through the operation of the engine 770.

The reformer 730 transfers the extracted reformed gas RG to the reformed gas liquefier 740 and/or the fuel cell 750. According to the embodiments, the reformer 730 transfers the extracted reformed gas RG to the reformed gas storage tank 732.

The reformed gas storage tank 732 transfers the stored reformed gas RG to the reformed gas liquefier 740 and/or the fuel cell 750.

The reformed gas liquefier 740 liquefies the transferred reformed gas RG to produce a liquefied reformed gas LRG and transfers the resulting liquefied reformed gas LRG to the heat exchanger 720. According to the embodiments, the reformed gas liquefier 740 liquefies the reformed gas RG using the cold energy contained of the cryogenic refrigerant REF transferred from the heat exchanger 720.

The fuel cell 750 generates electrical energy (or electric power PW) using the reformed gas RG transferred from the reformer 730. According to the embodiments, the fuel cell 750 generates electrical energy PW by using the hydrogen gas or the oxygen gas transferred from the reformer 730.

The fuel cell 750 transfers the generated electrical energy PW to the superconducting device 760.

The superconducting device 760 may be a device including a superconductor. The superconducting device 760 may be a device that operates using the superconducting phenomenon at a cryogenic temperature. According to the embodiments, the superconducting device 760 maintains the superconducting state using the cold energy contained in the refrigerant REF transferred from the heat exchanger 720 so that the superconducting device 760 can operate in the superconducting state.

The cold energy utilization system 700 includes one superconducting device 760 or two or more superconducting devices 760.

According to the embodiments, the superconducting devices 760 include a superconducting generator 761, a superconducting power device 763, and a superconducting power storage device 765 when two or more superconducting devices 760 are included.

The superconducting generator 761 maintains the superconducting state using the cold energy of the refrigerant REF and generates electrical energy (or electric power; PW) in the superconducting state. According to the embodiments, the superconducting generator 761 converts mechanical energy ME transferred from the engine 770 to electrical energy PW in the superconducting state.

According to the embodiments, the superconducting generator 761 includes a superconducting electromagnet and a superconducting rotor (e.g., a coil). The superconducting electromagnet surrounds the superconducting coil and generates an electromagnetic field. The superconducting coil rotates in the electromagnetic field generated by the superconducting electromagnet to convert mechanical energy ME to electrical energy PW during rotation of the engine 770.

The superconducting power device 763 maintains the superconducting state by using the cold energy of the refrigerant REF and consumes the electrical energy PW in the superconducting state. According to the embodiments, the superconducting power device 763 consumes the electrical energy PW transferred from the fuel cell 750.

The superconducting power storage device 765 maintains the superconducting state using the cool energy of the refrigerant REF and stores the electrical energy PW generated by the superconducting generator 761 in the superconducting state. The superconducting power storage device 765 transfers the stored electrical energy PW to devices included in the cold energy utilization system 700 (e.g., the superconducting power device 763).

According to the embodiments, the superconducting power storage device 765 converts the electrical energy PW generated by the superconducting generator 761 into magnetic energy, stores the converted magnetic energy, converts the stored magnetic energy into electrical energy PW, and supplies the electrical energy PW to the super conducting power device 763.

According to the embodiments, the superconducting power storage device 765 may be a flywheel that converts electrical energy PW generated by the superconducting generator 761 into mechanical energy and stores the mechanical energy.

According to the embodiments, the superconducting devices 760 further include a superconducting cable 767 for transferring electrical energy PW between each of the devices 750, 761, 763 and 765. The superconducting cable 767 transfers the electrical energy PW generated by the superconducting generator 761 or the fuel cell 750 to the respective devices of the cold energy utilizing system 700.

According to the embodiments, the superconducting cable 761 is surrounded by the refrigerant line 721. For example, the superconducting cable 761 may be a composite cable that transfers electrical energy PW and refrigerant REF between each of the devices 750, 761, 763, and 765.

The engine 770 is an internal combustion engine that produces mechanical energy using the gaseous fuel GF transferred from the heat exchanger 720. According to the embodiments, the thermal energy generated by the engine 770 is used by the reformer 730. For example, the engine 770 is a rocket engine or a jet engine.

The cold energy utilization systems according to the embodiment of the present invention uses the cold energy of liquefied fuel or liquefied reformed gas to create a cryogenic environment required for a cryogenic device such as a liquefying device or a superconducting device. Therefore, according to the present invention, cold energy of liquefied fuel can be effectively used.

That is, the cold energy utilization system 700 according to the present invention can maintain the superconducting state for the superconducting devices 760 by using the cold energy of the liquefied fuel LF and supplies electrical energy generated by using gaseous hydrogen GH extracted from the liquefied fuel LF to the super conducting devices 760.

While the present invention has been described with reference to exemplary embodiments, those skilled in the art will appreciate that the exemplary embodiments are presented only for illustrative purposes and the present invention is not limited to the disclosed exemplary embodiments. On the contrary, it will be understood that various modifications and equivalents thereto are possible. Accordingly, the true scope of technical protection of the present invention should be determined by the technical idea recited in the appended claims.

### Industrial Applicability

Embodiments according to the concept of the present invention relate to a cold energy utilization system using cold energy.

## Claims

1. A cold energy utilization system comprising:
a fuel storage tank for storing liquefied fuel;
a reformer for extracting reformed gas from a boiled off gas (BOG) generated from the liquefied fuel stored in the fuel storage tank;
a reformed gas liquefier for generating liquefied reformed gas by liquefying the reformed gas transferred from the reformer;
a heat exchanger for transferring cold energy of the liquefied fuel transferred from the fuel storage tank and cold energy of the liquefied reformed gas transferred from the reformed gas liquefier to a refrigerant;
one or more superconducting devices; and
a refrigerant line for transferring the refrigerant from the heat exchanger to the reformed gas liquefier or the one or more superconducting devices,
wherein the reformed gas liquefier or the one or more superconducting devices operate in a superconducting state created by using the cold energy contained in the refrigerant.

2. The cold energy utilization system according to claim 1, further comprising an engine,
wherein the heat exchanger generates gaseous fuel by gasifying the liquefied fuel transferred from the fuel storage tank and transfers the gaseous fuel to the engine, and the engine uses the gaseous fuel to produce mechanical energy.

3. The cold energy utilization system according to claim 1, further comprising an engine for generating mechanical energy and two or more superconducting devices,
wherein the two or more superconducting devices include a superconducting generator, a superconducting cable, and a superconducting power device,
the superconducting generator converts, in the superconducting state, the mechanical energy transferred from the engine to electrical energy,
the superconducting cable supplies, in the superconducting state, the electrical energy generated by the superconducting generator to the superconducting power device, and
the superconducting power device consumes the electrical energy in the superconducting state.

4. The cold energy utilization system according to claim 1, further comprising a drive engine for generating mechanical energy and two or more superconducting devices,
wherein the two or more superconducting devices include a superconducting generator, a superconducting storage device, a superconducting cable, and a superconducting power device,
the superconducting generator converts, in the superconducting state, the mechanical energy transferred from the engine to electrical energy,
the superconducting cable supplies, in the superconducting state, the electrical energy generated by the superconducting generator to the superconducting power device,
the superconducting storage device converts the electrical energy produced by the superconducting generator into magnetic energy, stores the magnetic energy, converts the stored magnetic energy into electrical energy, and supplies the electrical energy to the superconducting power device through the superconducting cable, and
the superconducting power device consumes the electrical energy supplied from the superconducting storage device through the superconducting cable.

5. The cold energy utilization system according to claim 1, further comprising a drive engine for generating mechanical energy,
wherein the reformer extracts the reformed gas from the BOG by using thermal energy generated through operation of the engine.

6. The cold energy utilization system according to claim 1, further comprising a fuel cell for generating electrical energy using the reformed gas transferred from the reformer.

7. The cold energy utilization system according to claim 1, wherein the reformed gas comprises at least one of hydrogen, oxygen, and carbon.

8. The cold energy utilization system according to claim 1, wherein the refrigerant is any one of liquefied fuel, inert gas, ammonia, and nitrogen.

9. The cold energy utilization system according to claim 1, wherein the refrigerant line has a pipe structure surrounding at least a portion of the heat exchanger, the reformed gas liquefier, or the one or more superconducting devices.

10. The cold energy utilization system according to claim 1, wherein the cold energy utilization system is provided in a vessel, a vehicle, a rocket, or a generator.

11. A cold energy utilization system comprising:
a fuel storage tank for storing liquefied fuel; a reformer for extracting reformed gas from a boiled off gas (BOG) generated from the liquefied fuel stored in the fuel storage tank;
a reformed gas liquefier for generating liquefied reformed gas by liquefying the reformed gas transferred from the reformer;
a heat exchanger for transferring cold energy of the liquefied fuel transferred from the fuel storage tank and cold energy of the liquefied reformed gas transferred from the reformed gas liquefier to refrigerant and for generating gaseous fuel by gasifying the liquefied fuel;
an engine for generating mechanical energy using the gaseous fuel transferred from the heat exchanger;
a superconducting generator that maintains a superconducting state by using cold energy contained in the refrigerant and converts the mechanical energy transferred from the engine to electrical energy; and
a superconducting power device that maintains a superconducting state by using cold energy contained in the refrigerant and consumes the electrical energy,
wherein the reformed gas liquefier maintains the superconducting state using the cold energy contained in the refrigerant and operates in the superconducting state.

12. The cold energy utilization system according to claim 11, further comprising a refrigerant line for transferring the refrigerant from the heat exchanger to the reformed gas liquefier or to the one or more superconducting devices.

13. The cold energy utilization system according to claim 11, further comprising a superconducting cable that maintains the superconducting state using the cold energy contained in the refrigerant and transfers the electrical energy generated by the superconducting generator to the superconducting power device.

14. The cold energy utilization system according to claim 13, wherein the superconducting cable transfers the refrigerant transferred from the heat exchanger to the superconducting generator and the superconducting power device.

15. The cold energy utilization system according to claim 11, further comprising a superconducting power storage device for storing electrical energy generated by the superconducting generator and for supplying the stored electrical energy to the superconducting power device.

16. A cold energy utilization system comprising:
a fuel storage tank for storing liquefied fuel;
a BOG storage tank for storing a boiled off gas (BOG) generated from the liquefied fuel stored in the fuel storage tank;
a fuel liquefier for liquefying the BOG transferred from the BOG storage tank and for transferring the resulting liquefied BOG to the fuel storage tank;
a reformer for extracting reformed gas from the BOG transferred from the BOG storage tank; a reformed gas liquefier for generating liquefied reformed gas by liquefying the reformed gas transferred from the reformer;
a heat exchanger for transferring cold energy of the liquefied fuel transferred from the fuel storage tank and cold energy of the liquefied reformed gas transferred from the reformed gas liquefier to a refrigerant;
one or more superconducting devices; and
a refrigerant line for transferring the refrigerant from the heat exchanger to the reformed gas liquefier or to the one or more superconducting devices,
wherein the reformed gas liquefier or the one or more superconducting devices maintains a superconducting state using the cold energy contained in the refrigerant and operates in the superconducting state.

17. The cold energy utilization system according to claim 16, wherein the cold energy utilization system provides an optical measuring function, a diagnostic function based on condition-based maintenance, a control function including predictive control or self control, a safety-related function including emergency control (EC) or emergency shutdown (ESD), a monitoring function of monitoring a condition and a position of an operator, or a maintenance function based on the condition-based maintenance.

18. The cold energy utilization system according to claim 17, wherein the cold energy utilization system performs a temperature measurement or a tension measurement using an optical fiber sensor.

19. The cold energy utilization system according to claim 18, wherein the optical fiber sensor includes an optical signal transmission fiber coated or packaged with a multifunctional composite material for a thermal insulation function or a tension reinforcing function.

20. The cold energy utilization system according to claim 17, wherein the cold energy utilization system sets results of dynamic simulation of gas, fluid, and thermal dynamics, performed by using numerical modeling based on multiphysics as conditions, derives an optimal simple expression for the diagnostic function or the control function by using a fluid structure interaction (FSI) technique on the basis of the conditions, monitors at least one of the gas, fluid, and thermal dynamics on the basis of the optimal simple expression, and performs the control function according to results of the monitoring.

21. The cold energy utilization system according to claim 20, wherein the cold energy utilization system performs the control function by using a machine learning technique.

22. The cold energy utilization system according to claim 17, wherein the cold energy utilization system performs a measurement with respect to a structure in which the cold energy utilization system is provided using an optical measurement technique, processes results of the measurement by using a situation recognition technique, and minimizes an error range of the measurement results according to results of the processing.

23. The cold energy utilization system according to claim 22, wherein the cold energy utilization system minimizes the error range of the results of the measurement by using a machine learning technique.

24. The cold energy utilization system according to claim 16, wherein the cold energy utilization system synchronizes a first time required for a first signal generated by a measuring device to reach a sensor provided in the structure, a second time required for a second signal generated by the sensor in response to the first signal to reach the measuring device, or a third time required for the second signal to be quantified and then extracted after reaching the measuring device, with a standard time.
